# EUROPEAN PATENT APPLICATION

(11) **EP 4 345 083 A1**
(43) Date of publication of application: **03.04.2024**
(21) Application number: 22198530.2
(22) Date of filing: 28.09.2022
(51) Int. Cl.: C04B 41/85

(54) **XONOTLITE-BASED COATING ON A CEMENTITIOUS PRODUCT AND MANUFACTURING METHOD**

(71) Applicant: Etex Services NV, 1880 Kapelle-op-den-Bos (BE); Etex France Exteriors SAS, 78300 Poissy (FR)
(72) Inventor: BORDIN, Ruben, 2800 Mechelen (BE); DAMETTE, Olivier, 27430 Saint Etienne du Vauvray (FR); COPPENS, Sandrine, 78300 Poissy (FR)
(74) Representative: Etex Services NV - Etex IPSC

(57) **Abstract**

The present invention concerns to a method of manufacturing of a cementitious product such as a fiber cement product, comprising the steps of manufacturing a green sheet based on an aqueous slurry comprising cement, coloring a main surface of said green sheet by application an aqueous coating composition in the form of an aqueous dispersion comprising at least 50 weight.%, of calcium silicate particles (2p), based on the total dry weight of said coating composition, wherein the calcium silicate particles (2p) comprise xonotlite, tobermorite, or a mixture thereof and are composed of composite particles having an inner porous structure and an external layer. The invention furthermore relates to an aqueous coating composition therefore, and a resulting product.

## Description

### TECHNICAL FIELD

The present invention relates to a method of manufacturing a coated cementitious product. The present invention further relates to a coated cementitious product obtained therewith and to a coating composition therefore.

### BACKGROUND OF THE INVENTION

Cementitious products such as fibre-cement boards come out of production with a colour that may not be appealing for all applications. Even gypsum boards, if filled with a coloured filler may have a dull colour. To lighten the colour of such board, titanium dioxide (TiO₂) based coatings can be applied onto a main surface of such construction boards. Coated fibre cement boards are described e.g., in EP2036871, EP3307696, and WO2016202680.

Titanium dioxide is a well-established and omnipresent natural substance. There have been recent discussions about whether it may be harmful to humans or even cause cancer. In 2020, the EU classified titanium dioxide in its powder form as a suspected carcinogen by inhalation under the EU's Classification and Labelling (CLP) Regulation. This classification of TiO₂ by the EU poses a serious issue to ensure health safety of workers active in the industrial production of TiO₂-coatings and coating thereof onto surfaces of inorganic construction boards.

Coating compositions comprising alternative components have been tested to replace TiO₂ as a pigment to lighten the colour of inorganic construction boards. For example, Imextend (Imerys) is a ultrafine ground calcium carbonate. Celite (Imerys) is made of diatomaceous earth. Casul (Remondis) is a synthetic pigment (ettringite). These alternative compositions, however, do not yield lighting properties comparable with the ones of TiO₂-based compositions.

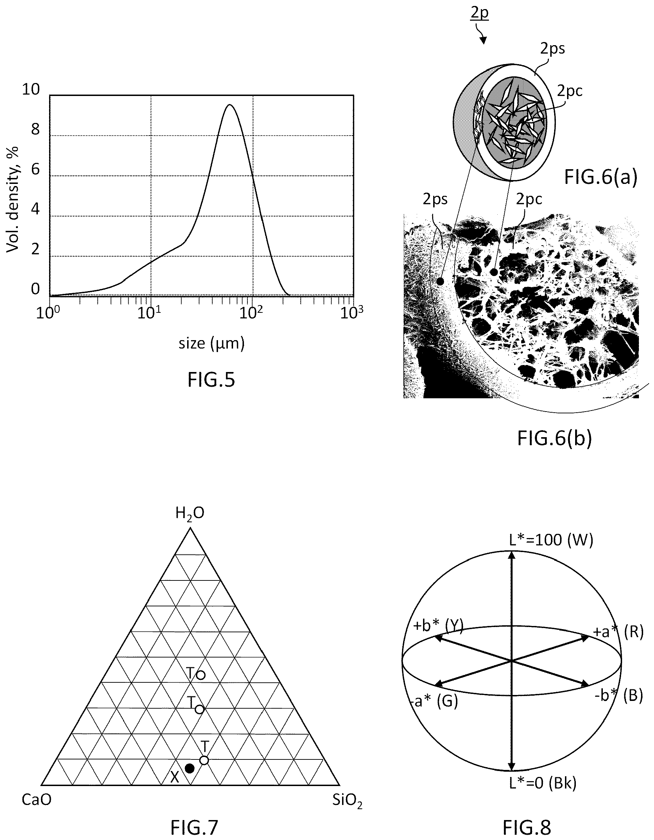

The CIELAB L*a*b*-colour space is a colour space defined by the International Commission on Illumination. It expresses colour as three values: L* for perceptual lightness, and a* and b* for the four unique colours of human vision: red, green, blue, and yellow. A given numerical change of any one of L*, a*, b*corresponds to a similar change in colour perceived by a human eye. As illustrated in Figure 8, the three coordinates of CIELAB represent
- the lightness of the color (L* = 0 yields black (Bk) and L* = 100 indicates diffuse white (W); (specular white may be higher),
- its position between red (R) and green (G) (a*, where negative values indicate green and positive values indicate red) and
- its position between yellow (Y) and blue (B) (b*, where negative values indicate blue and positive values indicate yellow).

Coating compositions are further known that comprise one or more fillers. Such fillers are also described in the art as extenders, extender pigments or inert pigments. These are characterized by a low refractive index (for instance around 1.5) such that they are rather invisible in a binder-based coating composition. However, they may contribute to the overall optical effect. Typical fillers include calcium carbonate and diatomaceous earth. Calcium silicate is also known as a filler. Calcium silicate is furthermore used as a binder for mineral coatings. Such mineral coatings are for instance used for façade paintings and are long known and sold under the tradename KEIM. As a binder, waterglass appears needed.

One further coating composition is known from DE202017104644U1. This coating composition comprises a variety of inorganic ingredients in addition to a vinylacetate ethylene based binder, a polyurethane based thickener as well as potassium based waterglass. The inorganic ingredients include calcium silicate hydroxide, precipitated calcium carbonate, calcit and talc. The calcium silicate hydroxide mineral is specified to be xonotlite. It is mentioned that such a combination of inorganic ingredients may replace titanium oxide (TiO2). A fine powder is deemed preferred, as such fineness enhances light scattering. A specific particle size distribution is however not disclosed. The resulting coating was tested according to DIN EN 13300 norm and obtained a class 2 for hiding power and for wet abrasive resistance. However, DIN EN 13300 is a norm for interior and ceiling wall paint rather than for exterior products. Class 2 therein is a medium result - the best result is class 1.

### SUMMARY OF THE INVENTION

Therefore, it is an object of the present invention to provide a method of coating a building product with an exterior coating. More particularly, it is desirable to provide a coating method, which provides an alternative to the use of TiO₂ and nevertheless yields comparable results. The coating should furthermore be applicable as such, but also provide good results when adding pigments to provide a desired color.

The present invention is defined in the appended independent claims. Preferred embodiments are defined in the dependent claims.

According to a first aspect, the invention relates to a method for providing a coated cementitious product, comprising the steps of (1) providing an aqueous slurry comprising cement; (2) manufacturing a green sheet using said aqueous slurry; (3) colouring a main surface of said green sheet by applying an aqueous coating composition as a dispersion comprising calcium silicate particles comprising xonotlite, and (4) curing said green sheet with said coloured main surface.

According to a second aspect, the invention relates to an aqueous coating composition in the form of an aqueous dispersion comprising calcium silicate particles in an amount of at least 50% by weight based on dry weight of said coating composition, preferably at least 75% by weight based on dry weight of said coating composition, wherein at least part of said calcium silicate particles (2p) are in the form of composite particles comprising an inner porous structure and an external layer, wherein the inner structure (2pc) comprises crystals ofxonotlite, tobermorite, and/or a mixture thereof, which are entangled defining inner pores, and wherein the external layer forms a crystalline skin comprising crystals of xonotlite, or tobermorite, or mixture thereof.

According to a third aspect, the invention relates to a coated cementitious product comprising a coating based on calcium silicate at a main surface, wherein said coating is co-cured with the cementitious product, and wherein said coating comprises xonotlite or another calcium silicate having a CaO/SiO2 molar ratio in the range of 0.8 to 1.2, preferably in the range of 1.0 to 1.2.

It has been found by the inventors in investigations leading to the present invention that an aesthetically appealing coating may be formed on a cementitious product on the basis of calcium silicate, which is applied in the form of an aqueous dispersion prior to curing the cementitious product. The coating is then co-cured with the cementitious product. A strong adhesion with the cementitious product is obtained, as the calcium silicate material will react with the cement and/or other ingredients of the green sheet. As a consequence, the coating step is integrated into the manufacturing process, which reduces overall production time. Furthermore, the coating step may be applied prior to bringing the cementitious product into a desired shape. This has the advantage of achieving uniformity in the coating process.

The calcium silicate particles advantageously comprise at least one of xonotlite, tobermorite and amorphous calcium silicate hydrate, known as CSH. Preferably, at least part of the calcium silicate particles is composed of composite particles, wherein the composite particles are composed of an inner porous structure and an external layer. The inner porous structure comprises and preferably predominantly or entirely consists of crystals of xonotlite, or tobermorite, or a mixture thereof, which are entangled defining inner pores. The external layer forms a crystalline skin comprising crystals of xonotlite, or tobermorite, or mixture thereof. Such particles may be formed in a specific process comprising an autoclaving step, and are therefore synthetic particles. During the coating process, such composite particles tend to break up, such that said crystals remain. The crystals are particularly needle-shaped. Afterwards, during ageing and particularly during exposure to a humid atmosphere, at least part of the xonotlite crystals may be transformed into a different form of calcium silicate. It seems that during such transformation the Ca to Si ratio of the calcium silicate may change and that carbonate may be incorporated therein. Notwithstanding such transformation, experimental results indicate that the color of the coating remains remarkably stable over time. This seems to indicate that any transformation give rise to formation of a calcium silicate form that is afterwards stable.

With the term "crystalline skin" it is described that the external layer is predominantly composed of crystals. Predominantly is herein at least 80% by weight, preferably at least 90% by weight or even at least 95% by weight or at least 97% by weight, at least 98% by weight, at least 99% by weight. As the skin is composed of individual crystals, pores may be present in between of the crystals. Preferably the crystals may be needle-shaped or plate-shaped, and the crystals may be entangled defining said pores. According to a preferred implementation, the crystals of the crystalline skin have an average size smaller than the crystals in in the inner porous structure. Furthermore, the pores in the crystalline skin may have an average size smaller than the inner pores.

The use of xonotlite for its fire-resistant properties as described e.g., in US4612344 and WO99/46215. Promaxon^{®}, is a commercial form of synthetic xonotlite particles. Herein, crystals of xonotlite are provided as agglomerates in a spherical substance with a mean diameter between 40 and 150 microns and with an internal part and an external layer. The crystals are loosely entangled in the internal part, whereas the crystals are more tightly entangled in the external layer. It is commercialized as a friction extender in brakepads and linings, and as a thixotropic agent in paints and coatings, as a parting agent for granulates, in dry liquid systems, flame retardant and drip suppressant in thermoplastics.

In a preferred embodiment, the synthetic xonotlite having an inner porous structure and an external layer in the form of a crystalline skin has an average particle size in the range of 5 to 100 µm, such as from 10 to 50 µm. Although the synthetic xonotlite particles are typically bigger than 5 µm, it is not excluded that the particles get broken and or that a size reduction treatment is performed upon generation of the coating composition. However, it is deemed an advantage of the coating composition that the minimum size is not too small, so as to facilitate effective removal of water after the coating step. In one embodiment, the composite particles in the aqueous coating composition preferably have an average size comprised between 35 and 85 µm. Upon coating, the composite particles typically break down into smaller fragments. The core-shell structure of the inner porous structure and the external layer is therewith no longer recognizable in the final coating. However, the individual crystals, typically needle-shaped and often mutually entangled and/or intermingled, remains.

Preferably, the aqueous coating composition is an aqueous dispersion of which at least 50% by weight, based on dry weight of the coating composition, more preferably at least 75% by weight or even at least 80% by weight is calcium silicate particles. This has the advantage of providing a dispersion of which the liquid medium, i.e. water or an aqueous solution, can be easily removed after the coating process. Such removal may be achieved in that the liquid medium flows away, for instance through a porous carrier. Additional means such as underpressure and/or heating may be applied.

According to the invention, the aqueous coating composition results in coloration of the main surface of the cementitious product, such as a fiber cement product. The desired color can be selected by means of addition of pigments. The calcium silicate itself provides a white color, when applied as a coating, and will give a certain opacity when applied in sufficient thickness. However, its refractive index is well below 2, such as about 1.6, which is significantly lower than a pigment such as TiO2. In some experiments in which the xonotlite form of calcium silicate was used together with pigments. An overall coloration was achieved that was deemed beneficial and quite comparable to the coloration achieved with a composition including TiO2. Preferably, red and / or yellow pigments or dyes are used. Pigments are herein particularly preferred as these have known alkaline resistance needed to withstand the pH of fiber cement.

The composite particles can have an L* value in the CIELAB L*a*b* colour space of at least 90, preferably at least 92. The calcium silicate particles preferably have a CaO / SiO2 molar ratio comprised between 0.6 and 1.1.

In one further implementation, the aqueous coating composition may include a further filler. Known fillers for pigmented coatings include minerals such as calcium carbonate, diatomaceous earth, clay, talc, glass powder, and microspheres. Organic fillers or binders are not excluded. However, in case of autoclave curing, such organic fillers or binders should be able to survive autoclave curing. In a further preferred embodiment, the aqueous coating composition is a mineral coating composition.

In one embodiment, the aqueous coating composition furthermore comprises a binder, which is preferably present in an amount of less than 25 wt.%, preferably less than 15 wt.%, more preferably less than 5 wt.%, more preferably between 0 and 2 wt.% based on the total weight of particles in the dispersion. The binder can comprise mineral and / or polymer binders. The binder preferably comprises not more than 40 wt.% of polymer binder over the total weight of binders (polymer + mineral), preferably not more than 25 wt.%, more preferably not more than 10 wt.%. In an embodiment, the binder comprises no polymer. In an alternative embodiment, the aqueous coating composition comprises no binder. The absence of a polymer binder is preferably, so as to withstand autoclave curing.

It is herein observed for sake of clarity that the composite particles of as used in the invention and/or preferred embodiments thereof, are not considered as a binder. It is not excluded that those particles may get bonded with the cement matrix of the green sheet. The inventors believe, without desiring to be bound thereby, that the binding with the cement matrix creates the coating from the individual particles. It is furthermore not excluded that bonds between individual composite particles may be formed, particularly in the presence of additional ingredients, such as calcium carbonate, water glass and/or quartz, which are then more preferably provided as a fine powder, for instance in an average particle size of less than 4 µm, preferably less than 2 µm or less than 1 µm. It is also feasible and deemed very likely, that any pigment particles might get adhered to the external layer of the composite particles or within the inner porous structure - when the composite particle breaks up. Still, the composite particles are largely or entirely crystalline and have an average particle size above what is typically considered as a fine powder. Moreover, the composite particles will not take up another shape in interaction with further ingredients of the coating. In fact, calcium silicate particles are typically used for fire resistance boards because of their stability up to very high temperatures.

The presence of a polymer binder is deemed beneficial, so as to apply a top coating without any further primer layer. The presence of a polymer binder may further be beneficial in case that printing of a pattern on top of the cementitious product is desired. Such top coating and/or printed pattern, for instance by inkjet printing, are preferably applied after the curing step. Suitable polymer binders will be aqueous binders, such as acrylate binders. Such a binder is well-known and typically based on emulsion polymerisation. Polymer binders may further include ethylenically unsaturated double bonds, so as to achieve curing. Some suitable formulations for radiation curable polymer binders are for instance known from WO2017/001236A1.

The aqueous coating composition preferably has a kinematic viscosity measured at room temperature with an AFNOR cup #4 having an orifice diameter of 4 mm, comprised between 10 and 15 s, preferably between 11 and 14 s. This has been found appropriate for application of the coating by spraying without damaging the green sheet. In one implementation, the aqueous coating composition can have particles contents defined as ratio (Mdry / Mwet) of the total weight of particles (Mdry) in the dispersion to a total weight of the dispersion (Mwet) comprised between 8 and 27%, preferably between 9 and 20%, more preferably between 10 and 15 wt.%

Preferably, the resulting coated cementitious product having a higher L* value in the CIELAB L*a*b* colour space than the original colour of the cementitious product, i.e. without coating.

In order to test the color of the resulting coating, reference is made to the dry layer and the wet layer (before dewatering). In one preferred embodiment, the dry layer resulting from the coating process has in the CIELAB L*a*b*-colour space,
- an L*-value of comprised between 62.0 and 75.0, preferably between 65.0 and 73.0, more preferably between 67.0 and 70.0, and is preferably equal to 69.0 ± 5.0, and / or
- an a*-comprised between 3 and 8, preferably between 4 and 6, and is preferably equal to 6.0 ± 2.5, and / or
- a b*-value comprised between 14 and 23, preferably between 18 and 22, and is preferably equal to 19.0 ± 3.0.

In an alternative embodiment, the dry layer has in the CIELAB L*a*b*-colour space,
- an L*-value of comprised between 45.0 and 58.0, preferably between 48.0 and 55.0, more preferably between 50.0 and 53.0, and is preferably equal to 52.0 ± 2.0, and / or
- an a*-comprised between 18 and 26, preferably between 20 and 24, and is preferably equal to 22.0 ± 1.5, and / or
- a b*-value comprised between 18 and 26, preferably between 20 and 24, and is preferably equal to 22.0 ± 1.5.

In the said preferred embodiment, the dry layer has a yellow color, in the alternative embodiment, a red color is achieved. These are considered preferred colors for corrugated sheets. It was found in experimental tests that the color values do not deviate much for a conventional coating including TiO₂ in addition to the specific pigments and that the color of the coatings does not change significantly overtime.

In one embodiment, the dry layer may have a thickness comprised between 20 to 80 µm, such as between 30 and 50 µm, preferably of 35 ± 10 µm. It is observed herein that the thickness may vary along the surface of the sheet. Therewith, the indicated thickness is an average based on at least three individual measurements, as obtained from a scanning electron microscope (SEM) picture of a cross-section of the sheet.

The aqueous coating composition can be applied onto the main surface of the green sheet by spraying, or roller or brush application, or with a doctor blade, or by dipping, or by electrostatic coating. In one embodiment, the aqueous coating composition is applied onto said main surface only. In another embodiment, the aqueous coating composition is applied onto at least a first and a second surface, such as a main surface and side edges of the green sheet. In again another embodiment, the aqueous coating composition is applied on the main surface and on an opposed second surface facing away from the main surface. Such coating on all sides is deemed beneficial as the coating creates a further protection of the cementitious product, for instance against damage during transport and/or assembly.

In one preferred implementation, the method further comprises a dewatering step, following the application of the aqueous coating composition. Due to the particulate structure of the coating composition, dewatering may be performed easily. For instance, water may flow away through a belt on which the green sheet lies and/or is transported, and/or sidewise. Furthermore, underpressure may be applied to a bottom side of such belt or other porous band for active dewatering. A drying step may be performed after the dewatering step, in known manner, by increasing the temperature, by application of heat from a heat source such as an infrared lamp, and/or by bringing the green sheet in a drying chamber with reduced humidity level and/or increased temperature in comparison to atmospheric conditions. Preferably, the dewatering step is applied in case that the green sheet is prepared from the aqueous slurry using a Hatschek process. As known, the Hatschek process comprises the transfer of fiber cement monolayers on a felt transport belt from one or more rotating sieves to an accumulator roll.

In one embodiment of the method of the invention, the green sheet is brought into a desired shape after application of the aqueous coating composition, and preferably after dewatering and/or drying of the green sheet with the coating composition. The advantage hereof is that the coating may be applied in a uniform manner in a gentle manner.

In a further embodiment of the method of the invention, the green sheet is compressed after application of the aqueous coating composition, and preferably after dewatering and/or drying of the green sheet with the coating composition. Compressing of cementitious products, such as fiber cement products, is known per se, and may be achieved by applying a pressure that is for instance in the range of 15 to 30 MPa, for instance 20 to 30 MPa. It results in a product with a higher density and improved properties, such as enhanced strength and reduced water absorption. The compression step will lead to further dewatering of the coating, as well as flattening the coating.

In one further and important embodiment, the aqueous coating composition as used in the method of the invention further comprises a hydrophobation agent. Preferred hydrophobation agents are based on alkyl- and alkoxy-silane technology and known per se in the art. The hydrophobation agent may be monomeric, oligomeric or polymeric in nature. Specific examples are for instance provided in Eur. Coatings. J. 3/2015, pp. 102-105. A hydrophobation agent is a known additive to fiber cement, either as an additive within the aqueous slurry from which the green sheet is formed, or as an additive applied onto a fiber cement product after curing. Hydrophobation is for instance applied to reduce inflow of water, and therewith reduce occurrence of efflorescence. The addition of a hydrophobation agent to the aqueous coating composition is deemed an efficient manner to achieve a uniform application thereof. Moreover, it is furthermore feasible to apply the coating composition, and hence the hydrophobation agent, also to side edges.

The curing step in the method of the invention may be an air-curing step, an autoclave-curing step, but also a carbonatation-curing step (i.e. with CO2). Conditions for these curing steps are known per se to the skilled person in the art. Furthermore, as known, the curing step may be preceded by any pre-curing treatment, which is for instance a curing step at atmospheric conditions during 6-12 hours at a temperature of 20-80 °C, for instance 40-70 °C. In the embodiment that the fiber cement product is a corrugated sheet, the curing step is preferably air-curing. In the event that the fiber cement product is a façade panel or an underfloor panel, autoclave curing is preferred. Autoclave curing however may affect the crystalline xonotlite material due to the presence of steam and cement, such that the resulting coating is no longer pure xonotlite.

These and other aspects of the invention will be further elucidated with reference to the Figures and the examples. It is observed for sake of completeness that any preferred embodiment as discussed and/or claimed with respect to one aspect (i.e. method, coating composition and resulting product) is also deemed disclosed with respect to the other aspects of the invention.

### BRIEF DESCRIPTION OF THE FIGURES

For a fuller understanding of the nature of the present invention, reference is made to the following detailed description taken in conjunction with the accompanying drawings in which:
**Figure 1(a)****:** shows a cementitious sheet comprising a coating applied over a main surface thereof according to the present invention.
**Figure 1(b)****:** shows a corrugated sheet comprising a coating applied over a main surface thereof according to the present invention.
**Figures 2(a) to 2(c)****:** show various coating apparatuses for applying a coating onto a main surface of a green sheet according to the present invention.
**Figure 3(a)****:** plots the L*, a*, b* values of sheets coated according to the present invention with TiO₂-coated boards as a function of exposure time.
**Figure 3b****):** plots the L* values of Figure 3(a) at a larger scale.
**Figure 4****:** plots the variations of L*, a*, b* values of sheets coated according to the present invention with TiO₂-coated boards after 3 months exposure time.
**Figure 5****:** shows a particle size distribution of Promaxon D (= xonotlite particles).
**Figure 6(a)****:** shows a schematic representation of a calcium silicate particle according to the present invention cut in half.
**Figure 6(b)****:** shows a micrograph of a detail of a calcium silicate particle according to the present invention cut in half.
**Figure7****:** shows xonotlite (X) and tobermolite positions in a tertiary phase diagram CaO - SiO₂ - H₂O.
**Figure 8****:** shows a representation of the CIELAB L*a*b*-colour space (B = blue, Bk = black, G = green, R = red, Y = yellow, W = white);
**Figure 9** is a SEM (Scanning Electron Microscope) Image made of a portion of the resulting sheet.
The image is based on a cross-section made through the sheet. Thickness measurements of the coating are shown.

### DETAILED DESCRIPTION OF THE INVENTION

The present invention concerns a method for providing a coated cementitious product. As a result of the method, a main surface of the cementitious product (1) having an original colour may be provided with a colour having a higher L* value in the CIELAB L*a*b* colour space than the original colour. The method of providing the coated cementitious product comprises,
- Providing an aqueous slurry comprising cement;
- Manufacturing a green sheet using said aqueous slurry;
- Colouring a main surface of said green sheet (1) by applying an aqueous coating composition (2L) as a dispersion comprising calcium silicate particles comprising xonotlite, and
- Curing said green sheet with said coloured main surface.

Particularly, the application of the aqueous coating composition (2L) onto the main surface will form a wet layer (2w) on the main surface. The method may then further comprise allowing the wet layer (2w) to dry to form a dry layer (2).

The aqueous coating composition (2L) is a dispersion comprising particles dispersed in an aqueous solution or in water. The particles comprise at least 50 wt.%, preferably at least 75 wt.% of calcium silicate particles (2p), based on the total weight of particles in the dispersion. The calcium silicate particles (2p) comprise xonotlite, tobermorite, or a mixture thereof, composed of composite particles. It is not excluded that a fraction of said composite particles is broken up prior to the coating step and/or during the coating step.

The composite particles are composed of,
- an inner porous structure (2pc) formed by inner crystals of xonotlite, or tobermorite, or a mixture thereof, which are, in one suitable embodiment, needle-like or plate like and which are entangled defining inner pores; the porous inner structure is surrounded by
- an external layer (2ps) forming a crystalline skin made of outer crystals of xonotlite, or tobermorite, or mixture thereof, which are - in one suitable embodiment - needle-like or plate like

Preferably, the outer crystals have an average size smaller than the inner crystals and/or the outer crystals are entangled defining outer pores, which the outer pores have an average size smaller than the inner pores. Furthermore, the composite particles may have an average particle size in the range of 5-100µm, such as 10-90µm, or 35-85µm.

It has been found by the inventors in experiments leading to the present invention that a cementitious product with a robust and optically attractive coating may be produced in a cost-effective manner. The coating step is herein integrated into the manufacture of the fiber cement product, thus reducing overall production time of a coating fiber cement product.

The cementitious product is preferably a fiber cement product, but may alternatively be any concrete product as known to the skilled person. Typically, fiber cement has a greyish colour by itself. The coated product may have a desired color, which is white or distinct to white due to the addition of pigments of any desired colour. The manufacture of fiber cement products typically starts from an aqueous slurry comprising cement in addition to fibers. Cement is typically Portland cement, but may alternatively be another type of cement. Fibers may be cellulose fibers, synthetic fibers and inorganic fibers such as basalt fibers or glass fibers. In case of autoclave cured cement products, silica is added so as to achieve a reaction between silica and cement during autoclaving. Therefore, in autoclave cured products, the content of cement is typically 25-50% by weight and the content of silica is typically 25-50% by weight, as based on the total dry weight of the slurry. In case of air-cured fiber cement products, the slurry typically comprises at least 60% and preferably at least 70% by weight of cement, as based on the total dry weight of the slurry. Further additives may be provided to the aqueous slurry, which are known per se to the skilled person. Examples include limestone, chalk, quick lime, slaked or hydrated lime, ground sand, silica sand flour, quartz floor, amorphous silica, condensed silica fume, microsilica, metakaolin, wollastonite, mica, perlite, vermiculite, aluminium trihydroxide (ATH), pigments, anti-foaming agent, flocculants and the like. The aqueous slurry may further contain recycled fiber cement material.

The manufacturing of the green sheet from an aqueous slurry may be performed by any method known in the art, such as the Magnani process, a flow-on process, the Hatschek process or a casting process. Flow-on and Hatschek are the preferred manufacturing processes, and Hatschek process is particularly preferred.

### AQUEOUS COATING COMPOSITION (2L)

The coating is applied onto a main surface of the green sheet (1) in the form of an aqueous coating composition (2L), which is a dispersion of particles in an aqueous solution or in water. The amounts of particles dispersed in water (dispersion) depends on the viscosity required for an optimal application thereof onto the main surface of the inorganic construction board. For example, the aqueous coating composition can have particles contents defined as a ratio (Mdry / Mwet) of the total weight of particles (Mdry) in the dispersion to a total weight of the dispersion (Mwet) including water (solution) comprised between 8 and 27%, preferably between 9 and 20%, more preferably between 10 and 15 wt.% or between 11 and 12 wt.%.

The kinematic viscosity measured at room temperature with an AFNOR cup #4 having an orifice diameter of 4 mm of the aqueous coating composition can be comprised between 10 and 15 s, preferably between 11 and 14 s. Flow cups are commonly used to accurately measure the viscosity of paints, inks, varnishes, and similar products. The flowing time of a liquid through an orifice of known diameter is used as a relative measurement and classification of viscosity. This measured kinematic viscosity is expressed in seconds of flow time which can be converted into centipoises (cPs) using a viscosity converting calculator.

The particles of the aqueous dispersion comprise at least 50 wt.%, preferably at least 60 wt.%; more preferably at least 75 wt.% of calcium silicate particles (2p), based on the total weight of particles in the dispersion. Besides the calcium silicate particles (2p), the aqueous coating composition (2L) can comprise dyes or additional pigments, preferably red and / or yellow pigments or dyes. The aqueous dispersion can even comprise small amounts of TiO2. Additives such as high brightness ultrafine ground calcium carbona (e.g., Imextend by Imerys) or extenders (e.g., Celtix by Imerys) to adapt the colour and reduce the overall cost of pigmentation.

The aqueous coating composition can comprise a binder, which is preferably present in an amount of less than 25 wt.%, preferably less than 15 wt.%, more preferably less than 5 wt.%, more preferably between 0 and 2 wt.% based on the total weight of particles in the dispersion. The binder can by mineral optionally together with an organic, e.g., a polymer. If a polymer binder is used it is preferred that it would form not more than 40 wt.% of the total weight of binders (polymer + mineral), preferably not more than 25 wt.%, more preferably not more than 10 wt.%. In an embodiment, the binder comprises no polymer.

### CALCIUM SILICATE PARTICLES (2P)

The particles of the aqueous dispersion comprise at least 50 wt.%, preferably at least 60 wt.%; more preferably at least 75 wt.% of calcium silicate particles (2p), based on the total weight of particles in the dispersion, which are in the form of xonotlite, tobermorite, or a mixture thereof. The particles of the aqueous dispersion preferably comprise 100 wt.% of the calcium silicate particles, preferably less 95 wt.% more preferably less than 90 wt.% based on the total weight of particles in the dispersion.

The calcium silicate particles (2p) are in the form of xonotlite, tobermorite, or a mixture thereof. Preferably, Figure 7 shows a tertiary diagram of CaO - SiO₂ - H₂O showing the approximate positions of xonotlite (= black circle labelled X) and of tobermorite (= white circles labelled T). Xonotlite has the chemical formula Ca₆(Si₆O₁₇)(OH)₂ and tobermorite has the chemical formulae Ca₅Si₆O₁₆(OH)₂·4H₂O or Ca₅Si₆(O,OH)₁₈·5H₂O. The calcium silicate particles (2p) preferably have a CaO / SiO₂ molar ratio comprised between 0.6 and 1.1. The calcium silicate particles are produced from lime and sand as well known to the skilled person, as described e.g., in WO99/46215.

The xonotlite and / or tobermorite suitable for the present invention are composed of entangled needle-like crystals, or plate-like crystals, or form composite particles, or mixtures thereof. The composite particles are illustrated in Figures 6(a) and 6(b) and are composed of,
- an inner porous structure (2pc) formed by inner crystals of xonotlite, or tobermorite, or a mixture thereof, which are in this embodiment needle-like or plate like and which are entangled defining inner pores, the porous inner structure being surrounded by
- an external layer (2ps) forming a crystalline skin made of outer crystals of xonotlite, or tobermorite, or mixture thereof, which are preferably needle-like or plate like, and which may be entangled defining outer pores.

Preferably, the outer crystals have an average size smaller than the inner crystals and/or the outer pores have an average size smaller than the inner pores.

Figure 5 shows an example of particle size distribution of composite particles suitable for the present invention. The composite particles can have an average size comprised between 35 and 85 µm, preferably between 40 and 80 µm, more preferably between 50 and 75 µm. Composite particles suitable for the present invention are, for example, commercialized under the name Promaxon D.

The composite particles themselves have a white colour and can have an L* value in the CIELAB L*a*b* colour space of at least 90, preferably at least 92.

### COATING METHODS

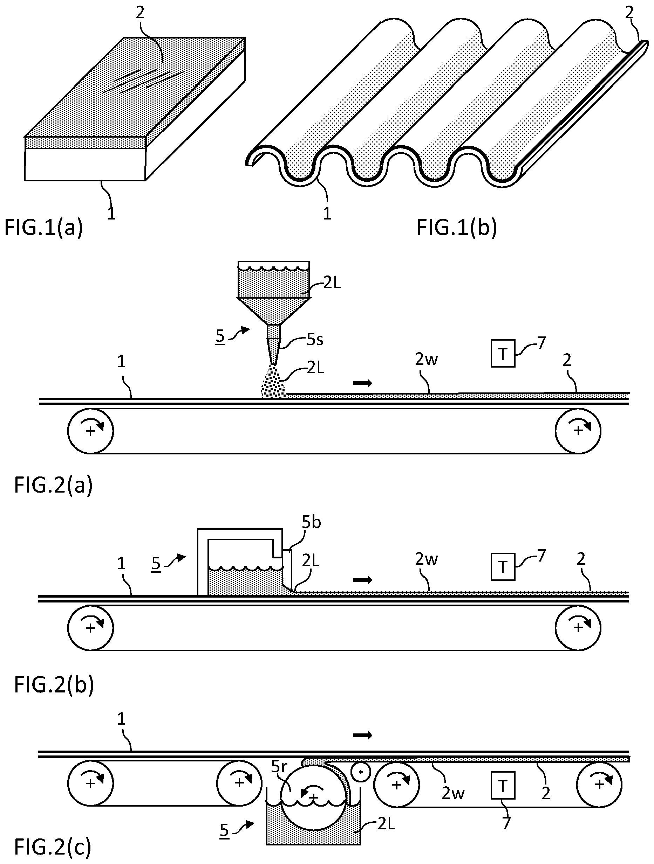

The aqueous coating composition (2L) can be applied to the main surface of the green sheet (1) by any technique known in the art. Figures 2(a) to 2(c) show three non-exhaustive examples of coating methods. As shown in Figure 2(a), the aqueous coating composition can be sprayed or poured onto the inorganic construction board, depending on the viscosity ot the aqueous dispersion. This technique is simple, robust, and reliable.

As shown in Figure 2(b), the aqueous coating composition can be applied with a doctor blade (5b) which controls the thickness of the wet coating (2w) applied onto the substrate.

Figure 2(c) shows application of the aqueous coating composition by roller coating. The coating techniques illustrated in Figures 2(b) and 2(c) are more suitable for flat construction boards.

The aqueous dispersion can also be applied by brush painting, by dipping, or by electrostatic coating.

It is preferred that the coating is applied (semi-) continuously as illustrated in Figures 2(a) to 2(c) with one continuous or several discrete green sheets (1) travelling on a conveyor. The aqueous coating composition (2L) is stored in a tank (5) with dispensing means for transferring a desired amount of aqueous coating composition onto the inorganic construction board to form a wet layer (2w), as this travels through the dispensing means. As shown in Figures 2(a) to 2(c) and discussed supra, the dispensing means can be a spraying head (5s) or pouring head, or a tank (5) partly opened with a doctor blade (5b), or a roller (5r) partly immersed in the aqueous coating composition. As the board continues travelling it reaches a setting station (7) for setting the wet layer (2w) to form the dry layer (2). The setting station (7) can comprise an oven to evaporate the water and other volatiles from the wet layer (2w). In case the aqueous coating composition comprises a binder, the setting station (7) can be configured for crosslinking the binder, with a source of light (IR, visible, UV) and the like. The discrete boards coated with the dry layer (2) are thus coated. The continuous board coated with the dry layer can be cut to the desired dimensions.

### COATED CEMENTITIOUS PRODUCT (1)

As illustrated in Figures 1(a) and 1(b) the green sheet (1) of the present invention comprises a green sheet with a main surface coated with a dry layer (2) comprising at least 50 vol.%, preferably at least 75 vol.% of calcium silicate particles (2p), based on the total volume of particles present in the dry layer. The calcium silicate particles (2p) comprise xonotlite, tobermorite, or a mixture thereof, composed of entangled needle-like crystals, or plate-like crystals, or composite particles. The dry layer is formed by coating and subsequent dewatering. Subsequent to the stage shown in Figure 1a, the green sheet is optionally shaped to become a corrugated sheet, as shown in Figure 1b. Alternative treatments, such as compression or edge treatments are not excluded. A subsequent step is the curing of the coated cementitious product, such as the coated fiber cement product. This results in a coating that is co-cured with the cementitious product. Due to the presence of calcium silicate that can form chemical bonds with the cement matrix of the green sheet, the dry layer herein gets chemically bonded to and integrated into the cementitious product.

The volume percent of the calcium silicate particles over the total volume of particles in the dry layer (2) can be determined with image analysis of stratigraphic micrographs of transverse cuts of the dry layer (and substrate). Xonotlite and tobermorite, and composite particles as defined below have a density ranging between 2.4 and 2.7 g / cm³. Inorganic particles other than the foregoing calcium silicate particles are likely to have similar densities. Optional binder molecules can be present in the aqueous coating composition (2L) as solute or as organic particles. If present as organic particles, they would not be present as particles anymore in the dry layer (2) as they form a continuous layer binding the particles together. This increases the actual volume % of calcium silicates in the dry layer compared with the volume % in the aqueous coating composition, which may contain up to 25 wt. of binder particles based on the total weight of particles in the dispersion.

Hence, an aqueous coating composition (2L) comprising at least 50 wt.% calcium silicate particles based on the total weight of particles in the dispersion yields a dry layer (2) comprising at least 50 vol.% of calcium silicate particles (2p) based on the total volume of particles present in the dry layer.

During the coating operation, the composite calcium silicate particles that are present in the aqueous coating composition tend to get broken. As a consequence, the composite particles are no longer visible in the resulting coating. It has been found that a dry layer is obtained comprising crystalline xonotlite material. In top views of the coating (not shown), it is clearly visible that the coating layer is crystalline and comprises needle-shaped crystals. The dry layer preferably has a thickness comprised between 20 to 80 µm, preferably comprised between 25 and 50 µm, more preferably the thickness of the dry layer is 35 ± 10 µm, depending on the desired colour hue of the dry layer (2) and on the original colour of the green sheet (1), which becomes the cementitious product after curing.

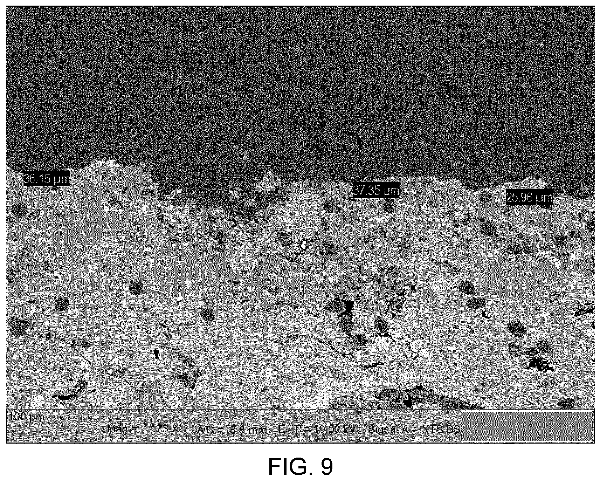

Fig. 9 is a SEM-image of a portion of the resulting coating layer in cross-sectional view. The coating is herein present on a corrugated sheet, and the image was made after curing of the product. It is recognizable as a rather continuous layer. Some black portions are visible in the layer, which would correspond to polyvinyl alcohol fibers from the cement. The coating thickness was measured at several locations and various between 26 µm and 37 µm. Generally, therefore, the coating is in the range of 20 to 50 µm, such as on average between 30 µm and 40 µm. It is further visible that the interface between the coating and the fiber cement sheet is not a straight line. Rather, portions of the coating material have migrated towards the interior of the fiber cement sheet. This indicates the co-curing of the coating with the fiber cement sheet, and hence creation of bonds between the calcium silicate material in the coating and the cement material of the fiber cement sheet.

Exposure of the product to an outside atmosphere that includes CO2 and water may give rise to ageing and/or efflorescence of the fiber cement material. The ageing may affect the pore size distribution. Due ot efflorescence, salts of the fiber cement migrate towards the surface of the material. Such salts may include silicon, calcium and/or carbonate in ionic form and dissolved into an aqueous solution. The interaction of such an aqueous solution with the crystalline xonotlite material may transform such crystals into amorphous material known as calcium silicate hydrate (CSH) gel, and/or into other forms of calcium silicate with a slightly changed ratio of Calcium to Silicon. Particularly, the Calcium to Silicate ratio may increase from 1.0 (xonotlite) to above 1.0. Furthermore, carbonate may be integrated into the minerals. For instance, one form of calcium silicate that may be formed due to the presence of calcium and carbonate ions is scawtite ((Ca7(Si6O18)CO3·2H2O)), which forms flake-like crystals.

Regardless of any transformation of the xonotlite to other forms of calcium silicate, it has been found that the optical performance of the resulting coating remains rather constant overtime. The said coating furthermore includes minor amounts of pigment, such as red pigment and/or yellow pigment. This indicates that the crystalline material of xonotlite that is entangled to create pores, is effective for distribution of the pigment throughout the coating, and that such distribution is not affected by any transformation of the calcium silicate.

For example, the dry layer (2) can have in the CIELAB L*a*b*-colour space,
- an L*-value of comprised between 62.0 and 75.0, preferably between 65.0 and 73.0, more preferably between 67.0 and 70.0, and is preferably equal to 69.0 ± 5.0, and / or
- an a*-comprised between 3 and 8, preferably between 4 and 6, and is preferably equal to 6.0 ± 2.5, and / or
- a b*-value comprised between 14 and 23, preferably between 18 and 22, and is preferably equal to 19.0 ± 3.0.

The values of a* and b* depend mostly on the presence or not of other pigments, added to the aqueous coating composition (2L) to modify the colour of the dry layer (2). In all cases, the dry layer (2) increases the L*-value of the construction board from the original colour thereof, i.e., the colour of the board is lighter with the dry layer (2) than the original colour. Results of ageing experiments are discussed below.

### EXAMPLES

Aqueous coating compositions for imparting a light yellow-orange colour to a fibre-cement corrugated board for outdoor applications was prepared. The aqueous compositions comprised yellow pigment (Yellow 920 from Lanxess) and red pigment (Red 212 from Lanxess) and a white pigment to lighten the colour comprising (1) calcium silicate composite particles (Promaxon D) according to the present invention (= INV), and (2) TiO₂ according to the prior art (= TiO₂). The aqueous coating compositions INV and TiO₂ are defined in Table 1 below.

The aqueous coating compositions of Table 1 were applied onto a main surface of the green sheets by spraying, yielding a dry layer (2) of about 20 to 60 µm, preferably comprised between 25 and 50 µm, more preferably the thickness of the dry layer is 35 ± 10 µm. The green sheets were present on a conveyer belt such as shown in Fig. 2(a). Dewatering was applied in a setting station (such as shown in Fig. 2(a)) which included a vacuum box on a bottom side of the conveyer belt. All the coated sheets were thereafter stacked individually between metal templates to avoid damage of the sprayed surface, while bringing the sheets into the corrugated shape as predefined by the metal templates. The resulting products were cured by air-curing during 1 week in a ventilated oven at a temperature in the range of 30-50°C. Thereafter, the products were exposed without any protection (roof, wall, trees) to the outdoor conditions starting in November in the region of Albi (France).

**Table 1: compositions of the aqueous coating compositions according to the invention (= INV) and to the prior art (= TiO₂)**

| | **INV** | | | **TiO₂** | | |
|---|---|---|---|---|---|---|
| **Component** | **m (q)** | **%dry** | **%wet** | **m (kq)** | **%dry** | **%wet** |
| Yellow (920) | 8 | 8% | 1% | 28 | 14% | 1% |
| Red (212) | 0.77 | 1% | 0% | 1.6 | 1% | 0% |
| Promaxon D | 97 | 92% | 10% | 0 | 0% | 0% |
| TiO₂ | 0 | 0% | 0% | 175 | 86% | 8% |
| Water | 900 | | 89% | 1878 | | 90% |
| dry layer thickness (µm) | 35 | | | 45 | | |

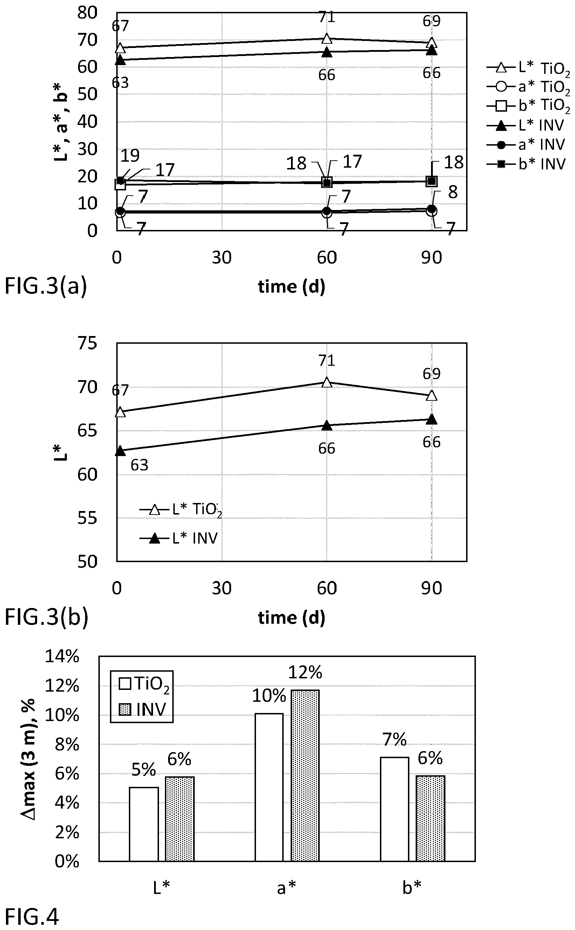

The original colour of the dry sheets, i.e. without coating, had an L* value in the CIELAB L*a*b* colour space of L* = 54.1, a* = 0.39, and b* = 4.35. The L*, a*, and b* values of the coated and corrugated sheets thus coated were measured as a function of outdoor exposure time starting in November. The results for the first 60 days are plotted in Figures 3(a) and 3(b).

**Table 2 - color measurement as a function of time for dry samples**

| | **INV** | | | **TiO₂** | | |
|---|---|---|---|---|---|---|
| **Time (d)** | **L*** | **a*** | **b*** | **L*** | **a*** | **b*** |
| 1 | 62.7 | 7.3 | 18.5 | 67.2 | 6.7 | 16.9 |
| 60 | 65.6 | 7.3 | 17.5 | 70.6 | 6.6 | 17.9 |
| 90 | 66.3 | 8.1 | 18.2 | 69.0 | 7.2 | 18.1 |
| 156 | 67.5 | 9.2 | 18.4 | 70.9 | 7.4 | 19.1 |
| 216 | 67.0 | 8.5 | 18.1 | 71.7 | 7.1 | 18.8 |
| 366 | 68.6 | 7.3 | 18.0 | 72.5 | 7.3 | 19.6 |
| 542 | 69.5 | 7.5 | 18.2 | 72.1 | 6.8 | 17.9 |

As shown in Figure 3(a) and as expected, both corrugated boards coated with the coating INV and TiO₂ yield the same values for the a* = 7 and b* = 17 to 19, since these parameters representative of the red and yellow colouring of the coatings are controlled by the yellow and red pigments present in the dry layers (2). Both parameters remain very stable over exposure time for both INV- and TiO₂-coatings, with relative variations of 10 to 12% for a* (cf. Figure 4), which actually correspond to very small absolute variations, because of the small values of a*.

The L*-values obtained with the INV-coating is slightly lower than but very similar to the one obtained with the prior art TiO₂- coating, with L*¨values of 66 with the INV-coating and 70 with the TiO₂-coating. The weathering properties of both coatings are very similar and very stable with relative variations of 5 or 6% concentrated in the first two months of exposure time (cf. Figures 3(b) and 4). In the course of time, the L* values increase slightly, in a manner such that the value of the coating of the invention becomes more similar to the prior art TiO₂ coating.

Table 3 shows weathering properties of both coatings as a function of time for wet samples

**Table 3 - color measurement as a function of time for wet samples**

| | | **INV** | | | **TiO₂** | |
|---|---|---|---|---|---|---|
| **Time (d)** | **L*** | **a*** | **b*** | **L*** | **a*** | **b*** |
| 1 | 57.0 | 8.3 | 18.6 | 62.5 | 6.3 | 16.7 |
| 60 | 48.2 | 9.0 | 20.9 | 61.5 | 6.7 | 18.0 |
| 90 | 48.7 | 9.6 | 21.3 | 63.1 | 8.5 | 20.0 |
| 156 | 49.8 | 10.8 | 22.0 | 63.8 | 9.1 | 20.9 |
| 216 | 49.9 | 10.4 | 21.6 | 63.7 | 9.3 | 21.0 |
| 366 | 50.9 | 9.2 | 21.8 | 63.8 | 9.6 | 21.2 |
| 542 | 51.2 | 10.2 | 22.5 | 63.2 | 9.6 | 21.1 |

The results in Table 3 indicate a quick change in color for the wet samples soon after its deposition, followed by a slow and acceptable change over time. The initial change in color may be due to structural transformation of the xonotlite material.

The results presented supra of the tests carried out with the INV-coating of the present invention and the TiO₂-coating of the prior art demonstrate that the conventional TiO₂-coating compositions can be replaced as such by an aqueous coating composition (2L) according to the present invention, with very similar colouring and lighting properties. Providing an alternative pigment for colouring with a lighter colour an inorganic construction substrate exposed to the severe weathering conditions of outdoor exposure is already per se an improvement as it gives the skilled person an additional option for colouring such boards. If the TiO₂ powder is proved to be carcinogenic, then the aqueous coating composition of the present invention would become a major breakthrough in the field of inorganic construction boards, such as cementitious products.

| **REF** | **DESCRIPTION** |
|---|---|
| 1 | Cementitious sheet |
| 2 | Dry layer |
| 2L | Aqueous coating composition |
| 2p | Particle |
| 2pc | Core of the composite particle |
| 2ps | Skin of the composite particles |
| 2w | Wet layer |
| 5 | Tank |
| 5b | Doctor blade |
| 5r | Coating roller |
| 7 | Setting element |

## Claims

1. A method for providing a coated cementitious product, comprising the steps of:
- Providing an aqueous slurry comprising cement;
- Manufacturing a green sheet using said aqueous slurry;
- Colouring a main surface of said green sheet by applying an aqueous coating composition as a dispersion comprising calcium silicate particles comprising xonotlite, and
- Curing said green sheet with said coloured main surface.

2. The method as claimed in claim 1, wherein the aqueous coating composition is an aqueous dispersion comprising said calcium silicate particles in an amount of at least 50% by weight based on dry weight of said coating composition, preferably at least 75% by weight based on dry weight of said coating composition.

3. The method as claimed in claim 1 or 2, wherein at least part of said calcium silicate particles (2p) are in the form of composite particles comprising an inner porous structure and an external layer, wherein the inner structure (2pc) comprises crystals of xonotlite, tobermorite, and/or a mixture thereof, which are entangled defining inner pores, and wherein the external layer forms a crystalline skin comprising crystals of xonotlite, or tobermorite, or mixture thereof.

4. The method as claimed in any of the preceding claims, wherein the calcium silicate particles have an average particle size of 5-90 µm, for instance 35-85 µm.

5. The method as claimed in any of the preceding claims, wherein the aqueous coating composition is free of any organic binder.

6. The method as claimed in any of the preceding claims, further comprising at least one pigment.

7. The method as claimed in any of the preceding claims, wherein the aqueous coating composition further comprises a hydrophobation agent.

8. The method according to any of the preceding claims, wherein the aqueous coating composition is applied onto the main surface by spraying, spatting, roller or brush application.

9. An aqueous coating composition in the form of an aqueous dispersion comprising calcium silicate particles in an amount of at least 50% by weight based on dry weight of said coating composition, preferably at least 75% by weight based on dry weight of said coating composition, wherein at least part of said calcium silicate particles (2p) are in the form of composite particles comprising an inner porous structure and an external layer, wherein the inner structure (2pc) comprises crystals of xonotlite, tobermorite, and/or a mixture thereof, which are entangled defining inner pores, and wherein the external layer forms a crystalline skin comprising crystals of xonotlite, or tobermorite, or mixture thereof.

10. The aqueous coating composition as claimed in claim 9, wherein said composite particles have an average particle size of 5-90 µm, for instance 35-85 µm.

11. The aqueous coating composition as claimed in claim 9 or 10, further comprising at least one of a pigment and a hydrophobation agent.

12. The aqueous composition as claimed in claims 9-11, wherein the calcium silicate particles (2p) have a CaO / SiO₂ molar ratio comprised between 0.6 and 1.2, preferably 0.8 to 1.2, more preferably 0.9-1.1

13. A coated cementitious product comprising a coating based on calcium silicate at a main surface, wherein said coating is co-cured with the cementitious product and wherein said coating comprises a calcium silicate having a CaO/SiO2 molar ratio in the range of 0.8 to 1.2, wherein said coating preferably comprises xonotlite and/or a calcium silicate with a CaO/SiO2 molar ratio in the range of 1.0 to 1.2.

14. The coated cementitious product as claimed in claim 13, wherein said coating comprises xonotlite and/or a carbonate-containing calcium silicate formed during ageing from xonotlite.

15. The coated cementitious product of claim 13-14, wherein the cementitious product is a fiber cement product, preferably in the form of a corrugated sheet.

16. The coated cementitious product of claim 13-15, obtainable with the method of any of the claims 1-8.
